(19) **Europäisches Patentamt**
**European Patent Office**
**Office européen des brevets**

(11) **EP 3 076 747 A1**

(12) **EUROPEAN PATENT APPLICATION**
published in accordance with Art. 153(4) EPC

(43) Date of publication:
**05.10.2016 Bulletin 2016/40**

(51) Int Cl.:
**H04W 88/04** (2009.01)

(21) Application number: **14865190.4**

(86) International application number:
**PCT/CN2014/092312**

(22) Date of filing: **26.11.2014**

(87) International publication number:
**WO 2015/078379 (04.06.2015 Gazette 2015/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.11.2013   CN 201310636405**

(71) Applicant: **Shanghai Langbo Communication Technology Company Limited**
**Shanghai 200240 (CN)**

(72) Inventor: **ZHANG, Xiaobo**
**Shanghai 200240 (CN)**

(74) Representative: **Friese Goeden Patentanwälte**
**Widenmayerstraße 49**
**80538 München (DE)**

(54) **METHOD FOR UE AND USER EQUIPMENT**

(57)     Disclosed are a method for a UE and a user equipment. The method comprises: in step 1, determining, by a UE, an initial value of a scrambling sequence generator, the initial value being determined by one or more of a first ID, a second ID and a time slot index; in step 2, generating a D2D scrambling sequence; and in step 3, conducting a scrambling operation on D2D data using the D2D scrambling sequence, and sending the D2D data on which the scrambling operation has been conducted. As one embodiment, the second ID is one element in an integer set from 504 to 3080. The present invention enables a D2D UE to reuse an initialization formula of an existing PUSCH scrambling generator, and at the same time, enables a base station to distinguish a D2D signal and an uplink signal, thereby avoiding serious interference generated due to identical scrambling sequences. The present invention can simultaneously support D2D UEs inside cell coverage and outside cell coverage.

FIG. 2

## Description

## BACKGROUND

## Technical Field

The disclosure is related to a scrambling scheme in the Device to Device (D2D) communication, and more particular to a scrambling scheme in the D2D of the Long Term Evolution (LTE).

## Related Art

In the traditional LTE system of 3rd Generation Partnership Project (3GPP), a data or a channel quality indicator (CQI) on the physical uplink share channed (PUSCH) is applied by a scrambling operation:

$$\tilde{b}(i) = \big( b(i) + c(i) \big) \bmod 2$$

Wherein, $\tilde{b}(i)$, $b(i)$ and $c(i)$ are the i-th bit of the data after scrambled, the i-th bit of the data before scrambled and the i-th bit of the scrambiling code sequence, respectively. $c(i)$ is determined by a pseudo-rendom gold sequence, referring to section 7.2 in the technical specification (TS) 36.211 for specific detials, wherein an initailzation value of the second m sequence generator is:

$$c_{\text{init}} = n_{\text{RNTI}} \cdot 2^{14} + q \cdot 2^{13} + \lfloor n_s/2 \rfloor \cdot 2^9 + N_{\text{ID}}^{\text{cell}}$$

Wherein, $n_{\text{RNTI}}$, $n_s$ and $N_{\text{ID}}^{\text{cell}}$ are a radio network trmporary identifier (RNTI), an index of the time slot of PUSCH in a radio frame and a physical identifier (ID) of a service cell of a user quipement, respectively; $q$ is 0 or 1 for identifying a maximum of 2 code words.

In the traditional 3GPP version, the data transmittion occurs between the base station and the user equipment (UE). In 3GPP R (Release) 12, D2D communication is approved and discussed. The essential characteristic of D2D is to allow data transfer between the UEs. For FDD and TDD system, 3GPP has concluded that the UE is not allowed for simultaneous receiving and transmitting in D2D system in the Radio Access Network Working Group 1 (RAN1) #73 meeting. Furthermore, for avoiding the interference of the downlink data on D2D communication, the UE occupies the uplink resource, i.e. the uplink frequency band of FDD and the uplink subframe of the subframe (TDD) for D2D communication (the downlink subframe of TDD needs further discussion). In RAN1 #74bis meeting, it is concluded that the subframe used in D2D communication employs the multiaddress manner of SC-FDMA. Futher, the physical channel for D2D communication reuses the structure of LTE PUSCH as far as possible, which includes the channel code, the demodulation reference signal, the cyclic redundancy check code, the scrambling, etc.

As the above decription, the initailzation value of the traditional PUSCH scrambling sequence generator is determined by the RNTI of UE, the physical ID of the service cell of the UE and the time slot index. For the UEs performing D2D communication, the assignement of the RNTI and the physical ID of the service cell require further optimization. The main reason includes:

- how to determine the RNTI and the physical ID of the service cell for the UEs performing D2D communication located outside the network coverage;

- how to determine the RNTI for the UEs performing D2D communication, which are located inside the network coverage and under the radio resource control idle (RRC-Idle) state; and

- how can the base station recognize whether the received signal is a D2D signal or the uplink signal of an adjacent service cell.

For the above problems, the disclosure provides a scrambling scheme in the D2D communication.

## SUMMARY

The disclosure provides a method used in a user equipment (UE), wherein the method includes the following steps:

A. determining an initialization value of a scrambling sequence generator, wherein the initialization value is determined by at least one of the following:

- a first ID;

- a second ID; and

- a time slot index;

B. generating a D2D scrambling sequence;

C. performing a scrambling operation on a D2D signal by using the D2D scrambling sequence;

wherein, the first ID is one element in an integer set from 0 to 65535, the second ID is one element in an integer set from 504 to 3080, and the time slot index is one element in an integer set from 0 to 19. The initialization value has a linear relationship with at least one of the following:

- the first ID;

- the second ID; and

- the time slot index.

The above integer set from 0 to 65535 is an obtained values set of RNTI (e.g, the hexadecimal values from 0000 to FFFF). An obtained value range of the second ID reuses the formula generating the initialization value of the current PUSCH scrambling sequence generator and is obtained by calculating the second ID substituting the cell physical ID, and the integer set 504 to 3080 is a retention value which has not been assigned. The above integer set from 0 to 19 is an obtained values set of $n_s$.

The above method achieves the interference randomization of D2D signal and LTE uplink data, which avoids the occurrence of the severe interference due to the same cell physical ID.

Specifically, according to one aspect of the disclosure, the UE is located outside a network coverage, and the secod ID is a constant value X. In one embodiment, the X is -1.

Specifically, according to one aspect of the disclosure, the UE is located outside a network coverage, and the first ID is determined by the international mobile equipment identity (IEMI) of the UE.

IEMI is the global unique identity of the UE. Obtaining the first ID by using IEMI may effectively randomize the interference among the users. In one embodiment, the first ID equals to mod(IMEI, $2^{16}$).

Specifically, according to one aspect of the disclosure, the UE is located inside a network coverage, and the second ID equals a physical ID of a service cell of the UE plus an offset value Y, and Y is an integer.

According the above aspect of the disclosure, the base station may distinguish whether the received signal is a D2D signal or an interference signal of an adjacent cell. It is advantageous to the interference cooperation between the base stations. In one embodiment, Y is 504

Specifically, according to one aspect of the disclosure, a slope of the first ID to the initialization value is 16384, and a slope of the second ID to the initialization value is 1.

In one embodiment, calculation of the initailzation value reuses the formula generating the initialization value of the current PUSCH scrambling sequence generator, wherein the first ID and the second ID replace $n_{RNTI}$ and $N_{ID}^{cell}$ respectively, i.e. $c_{init}$ = first ID · $2^{14}$+q · $2^{13}$+$[n_s/2]$ · 29 + second ID.

Specifically, according to one aspect of the disclosure, the step A further comprises the following steps:

A0. transmitting a wireless signal for indicating at least one of the following:

- the first ID;

- the second ID; and

- the time slot index.

In one embodiment, the wireless signal comprises at least one of following:

- Zadoff-Chu sequence;

- pseudo-random sequence; and

- an information block.

The disclosure provides a method used in a user equipment (UE), wherein the method includes the following steps:

A. determining an initialization value of a scrambling sequence generator, wherein the initialization value is determined by at least one of the following:

- a first ID;

- a second ID; and

- a time slot index;

B. generating a D2D scrambling sequence;

C. performing a descrambling operation on a demodulated D2D signal by using the D2D scrambling sequence.

Wherein, the first ID is one element in an integer set from 0 to 65535, the second ID is one element in an integer set from 504 to 3080, and the time slot index is one element in an integer set from 0 to 19. The initialization value has a linear relationship with at least one of the following:

- the first ID;

- the second ID; and

- the time slot index.

Specifically, according to one aspect of the disclosure, the UE is located outside a network coverage, and the secod ID is a constant value X.

Specifically, according to one aspect of the disclosure, the UE is located outside a network coverage, and the first ID is determined by the IEMI of the UE.

Specifically, according to one aspect of the disclosure, the UE is located inside a network coverage, and the second ID equals a physical ID of a service cell of the UE plus an offset value Y, and Y is an integer.

Specifically, according to one aspect of the disclosure, the step A further comprises the following steps:

A0. receiving a wireless signal for indicating at least one of the following:

- the first ID;

- the second ID; and

- the time slot index.

The disclosure provides a user equipment, wherein the user equipment comprises:

a first module for determining an initialization value of a scrambling sequence generator;

a second module for generating a D2D scrambling sequence; and

a third module for performing a scrambling operation on a D2D signal by using the D2D scrambling sequence.

Wherein, the first ID is one element in an integer set from 0 to 65535, the second ID is one element in an integer set from 504 to 3080, and the time slot index is one element in an integer set from 0 to 19. The initialization value is determined by at least one of the following:

- a first ID;

- a second ID; and

- a time slot index.

The initialization value has a linear relationship with at least one of the following:

- the first ID;

- the second ID; and

- the time slot index.

In one embodiment, the first module further transmits a wireless signal for indicating at least one of the following:

- the first ID;

- the second ID; and

- the time slot index.

The disclosure provides a user equipment, which the user equipment comprises:

a first module for determining an initialization value of a scrambling sequence generator;

a second module for generating a D2D scrambling sequence; and

a third module for receiving the scrambled D2D signal and performing a descrambling operation on a demodulated D2D signal by using the D2D scrambling sequence.

Wherein, the first ID is one element in an integer set from 0 to 65535, the second ID is one element in an integer set from 504 to 3080, and the time slot index is one element in an integer set from 0 to 19. The initialization value is determined by at least one of the following:

- a first ID;

- a second ID; and

- a time slot index.

The initialization value has a linear relationship with at least one of the following:

- the first ID;

- the second ID; and

- the time slot index.

In one embodiment, the first module further receives a wireless signal for indicating at least one of the following:

- the first ID;

- the second ID; and

- the time slot index.

The disclosure solves the problem of the initailzation of the scrambling sequence generator in D2D system. Through reasonably assigning the first ID and the second ID to the UE performing D2D communication, such that the UE performing D2D communication is capable to reuse the formula for generating he initialization value of the current PUSCH scrambling sequence generator and the base station is capable to distinguish the D2D signal and the uplink data at the same. Further, the IMEI is associated with the first ID to randomize the interference between the D2D signals. The disclosure is capable to support the UE performing D2D communication inside or outside the cell coverage at the same.

**BRIEF DESCRIPTION OF THE DRAWINGS**

The above and other exemplary aspects, features and advantages of certain exemplary embodiments of the present disclosure will be more apparent from the following description taken in conjunction with the accompanying drawings, in which:

Fig. 1 is a flowchat of determining D2D communication according to one embodiment of the present disclosure;

Fig. 2 is a schematic block diagram illustrating the scrambling processing apparatus according to one embodiment of the present disclosure; and

Fig. 3 is a schematic diagram illustrating the descrambling processing apparatus according to one embodiment of the present disclosure.

## DETAILED DESCRIPTION

The following description with reference to the accompanying drawings is provided to explain the exemplary embodiments of the disclosure. Note that in the case of no conflict, the embodiments of the present disclosure and the features of the embodiments may be arbitrarily combined with each other.

Embodiment I

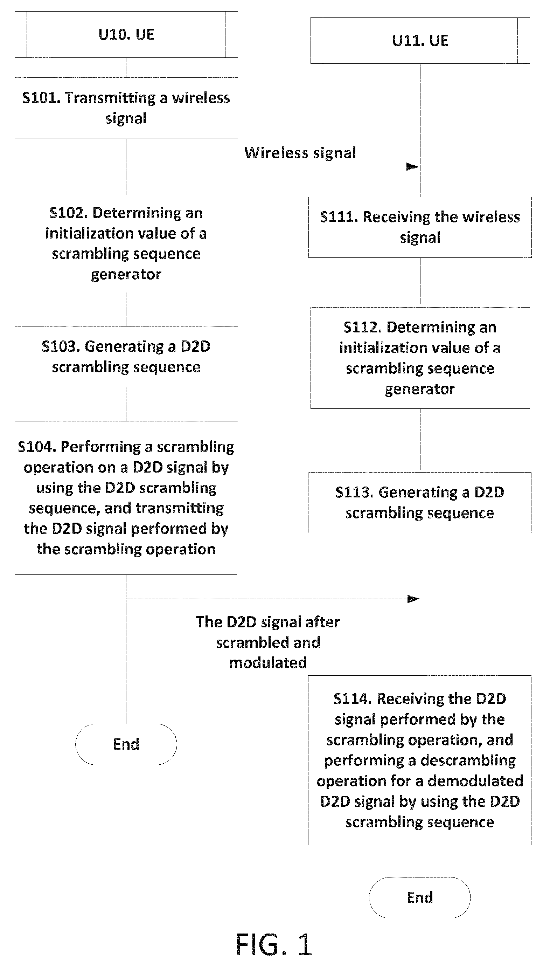

Embodiment I illustrates the flowchat of the D2D communication, as shown in Fig. 1. In Fig. 1, the UE U10 and the UE U11 are two UEs performing the D2D communication.

**For the UE U10**

In Step S101, transmitting a wireless signal for indicating at least one of the following:

- a first ID;

- a second ID; and

- a time slot index.

In the step S102, determining an initialization value of a scrambling sequence generator, wherein the initialization value is determined by at least one of the following:

- the first ID;

- the second ID; and

- the time slot index.

In the step S103, generating a D2D scrambling sequence.
In the step S104, performing a scrambling operation on a D2D signal by using the D2D scrambling sequence and transmitting the D2D signal performed by the scrambling operation.
After modulating, the scrambled D2D signal is transmitted to the UE U11 from the UE U 10.

**For the UE U11**

In the step S111, receiving the wireless signal to determine at least one of the following:

- the first ID;

- the second ID; and

- the time slot index.

In the step S 112, determining the initailzation value of the scrambling sequence generator, wherein the initailzation value is determined by at least one of the following:

- the first ID;

- the second ID; and

- the time slot index.

In the step S113, generating the D2D scrambling sequence.
In the step S114, receiving the D2D signal performed by the scrambling operation, and performing a descrambling operation on a demodulated D2D signal by using the D2D scrambling sequence.
In Embodiment I, the first ID is one element in an integer set from 0 to 65535, the second ID is one element in an integer set from 504 to 3080, and the time slot index is one element in an integer set from 0 to 19. The initialization value has a linear relationship with at least one of the following:

- the first ID;

- the second ID; and

- the time slot index.

In one example of Embodiment I, the UE U10 is located outside the network coverage, and the second ID is a constant value X.

Embodiment II

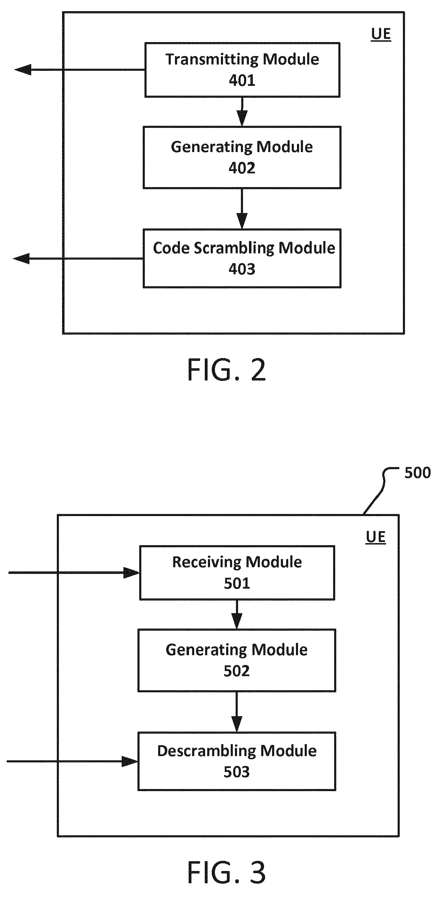

Embodiment II shows a schematic block diagram illustrating the scrambling processing apparatus in the user equipment, as shown in Fig.2. In the embodiment II, the UE processing apparatus 400 consists of a transmitting module 401, a generating module A402 and a code scrambling module 403.
The transmitting module 401 is used for transmitting a wireless signal for indicating one or more of a first ID, a second ID and a time slot index. The transmitting module 401 is further used for determining an initialization value of a scrambling sequence generator, wherein the initialization value is determined by one or more of the first ID, the second ID and the time slot index. The initialization value has a linear relationship with the first ID, and the initialization value has a linear relationship with the second ID.

The generating module A402 is used for generating a D2D scrambling sequence.

Thecode scrambling module 403 is used for performing a scrambling operation on a D2D signal by using the D2D scrambling sequence and transmitting the D2D signal performed by the scrambling operation.

In Embodiment II, the first ID is one element in an obtained value set of RNTI, and the time slot index is one element in an obtained value set of $n_s$. The second ID is one element in an integer set from 504 to 3080 or -2576 to -1.

Embodiment III

Embodiment III shows a schematic block diagram illustrating the descrambling processing apparatus in a user equipment, as shown in Fig. 3. In the embodiment III, the UE processing apparatus 500 consists of a receiving module 501, a generating module B502, and a descrambling module 503.

The receiving module 501 is used for receiving a wireless signal to determine one or more of a first ID, a second ID and a time slot index. The receiving module 501 is further used for determining an initialization value of a scrambling sequence generator, wherein the initialization value is determined by one or more of the first ID, the second ID and the time slot index. Wherein, the initialization value has a linear relationship with the first ID, and the initialization value has a linear relationship with the second ID. The generating module B502 is used for generating a D2D scrambling sequence. The descrambling module 503 is used for receiving the D2D signal performed by the scrambling opreation and performing a descrambling operation on a demodulated D2D signal by using the D2D scrambling sequence.

In Embodiment III, the first ID is one element in an integer set from 0 to 65535, the second ID is one element in an integer set from 504 to 3080, and the time slot index is one element in an integer set from 0 to 19.

It will be appreciated for those having ordinary skills in the related art that all or part of the above method may be accomplished by a program instructing related hardware. The program may be stored in a computer-readable storage medium, such as read-only memory, a hard disk or CD-ROM. Alternatively, all or part of the steps of the above-described embodiments may be accomplished by one or more integrated circuits. Accordingly, each module in the above-described embodiments may be accomplished by hardware implementation, or may also be realized by the form of software modules. The present disclosure is not limited to any particular form of combination of software and hardware.

Although the present disclosure is illustrated and described with reference to specific embodiments, those skilled in the art will understand that many variations and modifications are readily attainable without departing from the spirit and scope thereof as defined by the appended claims and their legal equivalents.

**Claims**

1. A method used in an user equipment (UE), comprising:

   A. determining an initialization value of a scrambling sequence generator, wherein the initialization value is determined by at least one of the following:

   - a first ID;
   - a second ID; and
   - a time slot index;

   B. generating a D2D scrambling sequence; and
   C. performing a scrambling operation on a D2D signal by using the D2D scrambling sequence;

   wherein the first ID is one element in an integer set from 0 to 65535, the second ID is one element in an integer set from 504 to 3080, and the time slot index is one element in an integer set from 0 to 19; wherein the initialization value has a linear relationship with at least one of the following:

   - the first ID;
   - the second ID; and
   - the time slot index.

2. The method used in the user equipment according to claim 1, wherein the UE is located outside a network coverage, and the secod ID is a constant X.

3. The method used in the user equipment according to claim 1, wherein the UE is located outside a network coverage, and the first ID is determined by an IEMI of the UE.

4. The method used in the user equipment according to claim 1, wherein the UE is located inside a network coverage; the second ID equals a physical ID of a service cell of the UE plus an offset value Y, and Y is an integer.

5. The method used in the user equipment according to claim 1, wherein a slope of the first ID to the initialization value is 16384, and a slope of the second ID to the initialization value is 1.

6. The method used in the user equipment according to any one of claims 1-5, wherein the step A further comprises the following steps:

A0. transmitting a wireless signal for indicating at least one of the following:

- the first ID;
- the second ID; and
- the time slot index.

7. The method used in the user equipment according to claim 1, further comprising:

D. tramsmitting the D2D signal performed by the scrambling operation.

8. A method used in an user equipment (UE), comprising:

A. determining an initialization value of a scrambling sequence generator, wherein the initialization value is determined by at least one of the following:

- a first ID;
- a second ID; and
- a time slot index;

B. generating a D2D scrambling sequence;
C. performing a descrambling operation on a demodulated D2D signal by using the D2D scrambling sequence;

wherein the first ID is one element in an integer set from 0 to 65535, the second ID is one element in an integer set from 504 to 3080, and the time slot index is one element in an integer set from 0 to 19; wherein the initialization value has a linear relationship with at least one of the following:

- the first ID;
- the second ID; and
- the time slot index.

9. The method used in the user equipment according to claim 8, wherein the UE is located outside a network coverage, and the secod ID is a constant X.

10. The method used in the user equipment according to claim 8, wherein the UE is located outside a network coverage, and the first ID is determined by an IEMI of the UE.

11. The method used in the user equipment according to claim 8, wherein the UE is located inside a network coverage, the second ID equals a physical ID of a service cell of the UE plus an offset value Y, and Y is an integer.

12. The method used in the user equipment according to claim 8, wherein the step C comprises the following steps:

receiving the D2D signal performed by the scrambling operation, and performing a descrambling operation on a demodulated D2D signal by using the D2D scrambling sequence.

13. The method used in the user equipment according to any one of claims 8 to 12, wherein the step A further comprises the following steps:

A0. transmitting a wireless signal for indicating at least one of the following:

- the first ID;
- the second ID; and
- the time slot index.

14. An user equipment, comprising:

a first module for determining an initialization value of a scrambling sequence generator;
a second module for generating a D2D scrambling sequence; and
a third module for performing a scrambling operation on a D2D signal by using the D2D scrambling sequence;
wherein the first ID is one element in an integer set of 0 to 65535, the second ID is one element in an integer set of 504 to 3080, and the time slot index is one element in an integer set of 0 to 19;
wherein the initialization value is determined by at least one of the following:

- a first ID;
- a second ID; and
- a time slot index;

wherein the initialization value has a linear relationship with at least one of the following:

- the first ID;
- the second ID; and
- the time slot index.

15. The equipment according to claim 14, wherein the first module further transmits a wireless signal for indicating at least one of the following:

- the first ID;
- the second ID; and

- the time slot index.

**16.** The equipment according to claim 14, wherein

the third module further tramsmits the D2D signal performed by the scrambling operation.

**17.** An user equipment, comprising:

a first module for determining an initialization value of a scrambling sequence generator;
a second module for generating a D2D scrambling sequence; and
a third module for performing a descrambling operation on a demodulated D2D signal by using the D2D scrambling sequence;
wherein, the first ID is one element in an integer set from 0 to 65535, the second ID is one element in an integer set from 504 to 3080, and the time slot index is one element in an integer set from 0 to 19;
the initialization value is determined by at least one of the following:

- a first ID;
- a second ID; and
- a time slot index;

the initialization value has a linear relationship with at least one of the following:

- the first ID;
- the second ID; and
- the time slot index.

**18.** The equipment according to claim 17, wherein the first module further transmits a wireless signal for indicating at least one of the following:

- the first ID;
- the second ID; and
- the time slot index.

**19.** The equipment according to claim 17, wherein

the third module further tramsmits the D2D signal performed by the scrambling operation.

| U10. UE | U11. UE |
|---|---|
| S101. Transmitting a wireless signal | |

Wireless signal →

| S102. Determining an initialization value of a scrambling sequence generator | S111. Receiving the wireless signal |
|---|---|

| | S112. Determining an initialization value of a scrambling sequence generator |
|---|---|
| S103. Generating a D2D scrambling sequence | |

| S104. Performing a scrambling operation on a D2D signal by using the D2D scrambling sequence, and transmitting the D2D signal performed by the scrambling operation | S113. Generating a D2D scrambling sequence |
|---|---|

The D2D signal after scrambled and modulated →

End

S114. Receiving the D2D signal performed by the scrambling operation, and performing a descrambling operation for a demodulated D2D signal by using the D2D scrambling sequence

End

# FIG. 1

```
┌─────────────────────────────────────────┐
│                                      UE  │
│         ┌─────────────────────┐          │
│ ◄───────│  Transmitting Module │         │
│         │         401          │          │
│         └─────────────────────┘          │
│                    │                      │
│                    ▼                      │
│         ┌─────────────────────┐          │
│         │  Generating Module   │          │
│         │         402          │          │
│         └─────────────────────┘          │
│                    │                      │
│                    ▼                      │
│         ┌─────────────────────┐          │
│ ◄───────│ Code Scrambling Module│        │
│         │         403          │          │
│         └─────────────────────┘          │
│                                           │
└─────────────────────────────────────────┘
```

FIG. 2

```
                                      ┌─ 500
┌─────────────────────────────────────────┐
│                                      UE  │
│         ┌─────────────────────┐          │
│ ───────►│  Receiving Module    │         │
│         │         501          │          │
│         └─────────────────────┘          │
│                    │                      │
│                    ▼                      │
│         ┌─────────────────────┐          │
│         │  Generating Module   │          │
│         │         502          │          │
│         └─────────────────────┘          │
│                    │                      │
│                    ▼                      │
│         ┌─────────────────────┐          │
│ ───────►│ Descrambling Module  │         │
│         │         503          │          │
│         └─────────────────────┘          │
│                                           │
└─────────────────────────────────────────┘
```

FIG. 3

<table>
<tr><td colspan="2" align="center">INTERNATIONAL SEARCH REPORT</td><td colspan="2">International application No.<br><br>**PCT/CN2014/092312**</td></tr>
</table>

**A. CLASSIFICATION OF SUBJECT MATTER**

H04W 88/04 (2009.01) i

According to International Patent Classification (IPC) or to both national classification and IPC

**B. FIELDS SEARCHED**

Minimum documentation searched (classification system followed by classification symbols)

H04W, H04J, H04L, H04B

Documentation searched other than minimum documentation to the extent that such documents are included in the fields searched

Electronic data base consulted during the international search (name of data base and, where practicable, search terms used)

CNABS; CNKI; VEN: ZHANG, Xiaobo; UE, user equipment, scrambling code, time slot, d2d, device to device, linear, user, equipment, scrambling, code, initial, value, slot, index

**C. DOCUMENTS CONSIDERED TO BE RELEVANT**

| Category* | Citation of document, with indication, where appropriate, of the relevant passages | Relevant to claim No. |
|---|---|---|
| A | CN 101931485 A (BEIJING SAMSUNG COMMUNICATION TECHNOLOGY RESEARCH INSTITUTE), 29 December 2010 (29.12.2010), the whole document | 1-19 |
| A | CN 101272232 A (ZTE CORP.), 24 September 2008 (24.09.2008), the whole document | 1-19 |
| A | CN 103259635 A (ACADEMY OF TELECOMMUNICATION TECHNOLOGY), 21 August 2013 (21.08.2013), the whole document | 1-19 |
| A | CN 102377540 A (BEIJING SAMSUNG COMMUNICATION TECHNOLOGY RESEARCH INSTITUTE), 14 March 2012 (14.03.2012), the whole document | 1-19 |
| A | CN 102340382 A (ACADEMY OF TELECOMMUNICATION TECHNOLOGY), 01 February 2012 (01.02.2012), the whole document | 1-19 |
| A | US 7308104 B1 (LG ELECTRONICS INC.), 11 December 2007 (11.12.2007), the whole document | 1-19 |

☐ Further documents are listed in the continuation of Box C. ☒ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 02 February 2015 (02.02.2015) | **17 February 2015 (17.02.2015)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**WANG, Xiaoyuan**<br><br>Telephone No.: (86-10) **62089294** |

Form PCT/ISA/210 (second sheet) (July 2009)

**INTERNATIONAL SEARCH REPORT**
Information on patent family members

| International application No. |
| --- |
| **PCT/CN2014/092312** |

| Patent Documents referred in the Report | Publication Date | Patent Family | Publication Date |
| --- | --- | --- | --- |
| CN 101931485 A | 29 December 2010 | KR 20120037414 A | 19 April 2012 |
| | | JP 2012531082 A | 06 December 2012 |
| | | WO 2010147419 A2 | 23 December 2010 |
| | | WO 2010147419 A3 | 03 March 2011 |
| | | US 2014211754 A1 | 31 July 2014 |
| | | RU 2011151636 A | 27 June 2013 |
| | | EP 2264937 A2 | 22 December 2010 |
| | | AU 2010260669 A1 | 12 January 2012 |
| | | US 2010322178 A1 | 23 December 2010 |
| | | HK 1147862 A1 | 17 October 2014 |
| | | CN 101931485 B | 12 February 2014 |
| | | US 8755339 B2 | 17 June 2014 |
| | | CA 2766045 A1 | 23 December 2010 |
| CN 101272232 A | 24 September 2008 | CN 101272232 B | 06 November 2013 |
| CN 103259635 A | 21 August 2013 | None | |
| CN 102377540 A | 14 March 2012 | None | |
| CN 102340382 A | 01 February 2012 | None | |
| US 7308104 B1 | 11 December 2007 | DE 10038173 A1 | 01 March 2001 |
| | | KR 100434262 B1 | 04 June 2004 |
| | | KR 20010018150 A | 05 March 2001 |
| | | DE 10038173 B4 | 07 December 2006 |

Form PCT/ISA/210 (patent family annex) (July 2009)